# EUROPEAN PATENT APPLICATION

(11) **EP 1 584 737 A1**
(43) Date of publication of application: **12.10.2005**
(21) Application number: 04016090.5
(22) Date of filing: 08.07.2004
(51) Int. Cl.: D06N 5/00, D04H 13/00, B32B 5/26

(54) **Reinforced stratiform product based on non-woven fabric, particularly for bituminization, and method for producing the product**

(30) Priority: 30.03.2004 IT PD20040084
(71) Applicant: O.R.V. OVATTIFICIO RESINATURA VALPADANA S.p.A., 35010 Grantorto (Padova) (IT)
(72) Inventor: Peruzzo, Maurizio, 36061 Bassano del Grappa (IT)
(74) Representative: Modiano, Guido

(57) **Abstract**

A reinforced stratiform product based on non-woven fabric, comprising:
-- a first ply (11, 111) of non-woven fabric formed by randomly arranged continuous filaments made of at least one first polyester polymer,
-- a second ply (12, 112) of non-woven fabric formed by randomly arranged continuous filaments made of at least one first polyester polymer,
-- at least one glass fiber mesh (13, 113), arranged between the two plies (11, 111; 12, 112).

The filaments of the two plies (11, 111; 12, 112) are thermally bonded by way of the presence, on at least one of the two plies (11, 111; 12, 112), selectively, of
-- at least portions of filaments made of a second polyester polymer that melts at a lower temperature than the first polyester polymer,
-- a layer of thermoadhesive material (114), which melts at a lower temperature than the filaments of the two plies (11, 111; 12, 112).

The entire assembly is consolidated by means of resin.

## Description

The present invention relates to a reinforced stratiform product based on non-woven fabric.

The product is used particularly but not exclusively as a mat for bituminization.

The present invention also relates to the method for manufacturing the stratiform product.

Mats for bituminization made of layered non-woven fabric of polyester fibers are already known.

Such mats are generally composed of three superimposed plies of non-woven fabric of polyester fibers, with a melting temperature of approximately 255 °C, a count of 4.4 dtex, and a cut of 76 mm, in which the central ply is produced by a carding machine that arranges the fibers predominantly longitudinally with respect to the advancement direction of production and the external plies are produced by respective carding machines that arrange the fibers predominantly in a transverse direction.

Each ply represents, by weight, one third of the total weight of the assembly.

The assembly is subjected to consolidation by passing through three needling machines arranged in series and is then treated with resin and dried in an oven and finally rolled up into rolls.

A product of this type weighs no less than 140 g/m², of which approximately 20% is constituted by the resin.

Lower grammages are not considered, since they would cause severe shrinkage both during impregnation in bitumen and during laying.

The resin treatment in fact is designed to minimize shrinkage, but can turn out to be an operation that is still insufficient for this purpose.

For this reason, and also because attempts are being made to reduce the quantity of resin, which is a very expensive raw material, it is known to reinforce the non-woven fabric mat with glass fibers embedded in various manners between the various layers and then bonded to the assembly.

A product thus described is defined as a carding-machine product.

As an alternative, mats for bituminization are known which are made of layered non-woven fabric formed by continuous polyester filaments and are composed of two or more superimposed plies of non-woven fabric of polyester fibers (with a melting temperature of approximately 255 °C and a count between 2.5 and 4.4 dtex); all the plies are arranged at random, and the total weight is equally distributed among the plies that constitute the non-woven fabric.

In this version also, known as "continuous-filament product", the set of plies is subjected to consolidation by passing through two or more needling machines and then treated with resin, dried in an oven and finally rolled up in rolls.

In this version, the products weigh no less than 120 g/m², of which approximately 15% is constituted by resin (continuous-filament products are on average stronger than carding-machine products and therefore the minimum grammages and the resin percentage are on average lower).

Reinforcement with glass fibers embedded between the layers in various manners is provided also for these continuous-filament products.

The methods used so far have led to improvements, but have not yielded results that can be considered optimum.

The aim of the present invention is to provide a reinforced stratiform product based on non-woven fabric that has improved stability against shrinkage in all directions and contains a reduced quantity of resin.

Within this aim, an object of the present invention is to provide a reinforced stratiform product based on non-woven fabric that can be provided with a method that is advantageous, with respect to current methods,in terms of productivity per hour.

Another object is to provide a reinforced stratiform product based on non-woven fabric that can be provided without particular technological complications with respect to known products.

Another object is to provide a reinforced stratiform product based on non-woven fabric whose cost for raw materials is not higher than that of current products.

Another object is to provide a reinforced stratiform product based on non-woven fabric that can be produced by using current facilities.

This aim and these and other objects that will become better apparent hereinafter are achieved by a reinforced stratiform product based on non-woven fabric, characterized in that it comprises:
-- at least one first ply of non-woven fabric formed by randomly arranged continuous filaments made of at least one first polyester polymer,
-- at least one second ply of non-woven fabric formed by randomly arranged continuous filaments made of said at least one first polyester polymer,
-- at least one glass fiber mesh, arranged between two of said at least one first and said at least one second plies,
the filaments of said at least one first ply and said at least one second ply being thermally bonded by way of the presence, on at least one of said at least one first ply and said at least one second ply, selectively, of
-- at least portions of filaments made of a second polyester polymer that melts at a lower temperature than said first polyester polymer,
-- a layer of thermoadhesive material, which melts at a lower temperature than the filaments of said at least one first ply and said at least one second ply,
the entire assembly being consolidated by means of resin.

Advantageously, the method for producing said reinforced stratiform product based on non-woven fabric, if said second polyester polymer is used, consists in:
-- forming said at least one first ply of non-woven fabric by coextruding said first polyester polymer and said second polyester polymer so as to provide randomly arranged continuous filaments,
-- forming said at least one second ply of non-woven fabric by extruding at least said first polyester polymer so as to provide randomly arranged continuous filaments,
-- arranging said at least one mesh of glass fibers between said at least one first ply and said at least one second ply,
-- calendering the assembly formed by said at least one first ply and at least one second ply and said mesh of glass fibers at the temperature at which said second polymer softens,
-- resin-treating and drying said assembly.

Equally advantageously, the method for producing said reinforced stratiform product based on non-woven fabric, if a thermoadhesive material is used, consists in:
-- extruding at least one first ply of non-woven fabric made of randomly arranged continuous polyester filaments,
-- extruding at least one second ply of non-woven fabric made of randomly arranged continuous polyester filaments,
-- depositing onto one of said at least one first ply and at least one second ply a layer of thermoadhesive material that melts at a lower temperature than the filaments of said at least one first ply and at least one second ply,
-- arranging at least one mesh of glass fibers between said at least one first ply and said at least one second ply,
-- calendering the assembly formed by said at least one first ply and at least one second ply and said mesh of glass fibers at the softening temperature of said thermoadhesive material,
-- resin-treating and drying said assembly.

Further characteristics and advantages of the present invention will become better apparent from the following detailed description of two preferred but not exclusive embodiments thereof, and of their production method, illustrated by way of non-limiting example in the accompanying drawings, wherein:
Figure 1 is a schematic perspective view of a first embodiment of the stratiform product according to the invention;
Figure 2 is an exploded perspective view of the components of the product of Figure 1;
Figure 3 is a schematic perspective view of a second embodiment of the stratiform product according to the invention;
Figure 4 is an exploded perspective view of the components of the product of Figure 3.

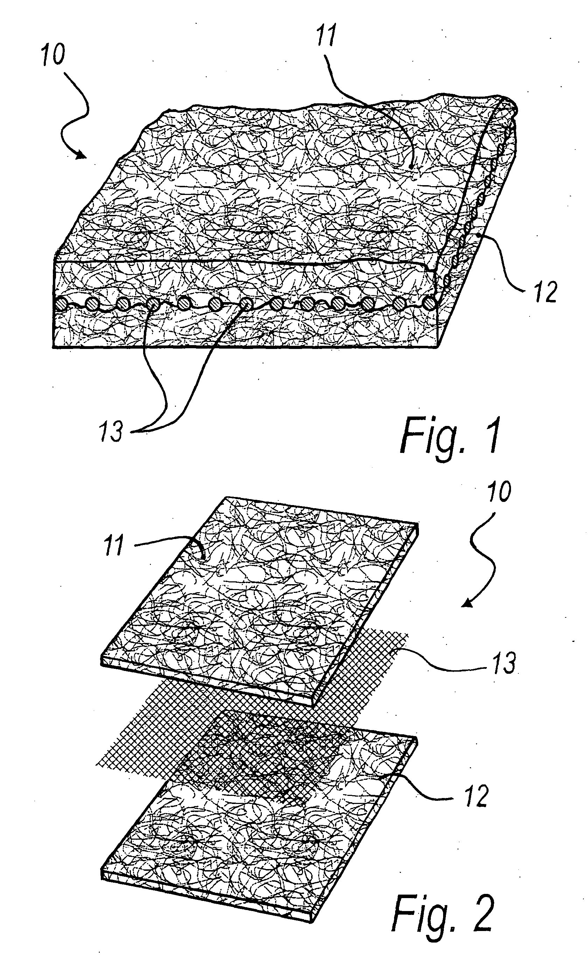

With reference to Figures 1 and 2, a first embodiment of a reinforced stratiform product based on non-woven fabric is generally designated by the reference numeral 10.

The stratiform product 10 comprises at least one first ply of non-woven fabric made of randomly arranged continuous filaments, predominantly made of a first polyester polymer; said first ply of non-woven fabric is designated by the reference numeral 11.

The product further comprises at least one second ply of non-woven fabric made of randomly arranged continuous filaments, predominantly made of said first polyester polymer; said second ply of non-woven fabric is designated by the reference numeral 12.

Both the first ply 11 and, in this embodiment, the second ply 12 have portions of their continuous filaments that are constituted by a second polyester polymer, which is added for example by coextrusion to the first polyester polymer, as described in greater detail hereinafter.

On the first and second plies 11 and 12 it is also possible to provide continuous filaments entirely made of the second polyester polymer.

The portions of the filaments of the first and second plies 11 and 12 that are made of the first polyester polymer have a count comprised between 2.5 and 4.4 dtex, a weight of approximately 40 g/m², and a melting temperature of approximately 255 °C.

Both the portions of continuous filaments made of the second polyester polymer and any continuous filaments entirely made of said second polyester polymer instead have a count comprised between 2.5 and 4.4 dtex and a weight comprised between 5 and 8 g/m².

At least one mesh made of glass fibers 13 is arranged between the first ply 11 and the second ply 12.

By way of example, the mesh 13 has a weight of approximately 8 g/m² and can have various counts and constructive methods; for example, the mesh 13 has a warp of 340 dtex and 1.6 filaments per cm and a weft of 340 dtex and 0.4 filaments per cm, the entire assembly being bonded by means of polyvinyl alcohol.

The second polyester polymer that composes said filaments is a low-melt polymer and has a melting temperature of approximately 234 °C, which is lower than the melting temperature of the filaments of the first ply 11.

Said second polyester polymer allows thermal bonding of the first ply 11 and of the second ply 12, as specified in greater detail in the method for producing the reinforced stratiform product based on non-woven fabric 10 described hereinafter.

The method for producing said first embodiment of the stratiform product 10 consists in coextruding, together with the first polyester polymer, which is the predominant component of the continuous filaments of the first ply 11, the second polyester polymer, so as to provide a first ply 11 constituted by randomly arranged continuous filaments in which there are portions of filaments (or entire filaments) that are made of the second low-melt polyester polymer.

Likewise, the second polyester polymer is coextruded together with the first polyester polymer, so as to provide a second ply 12 constituted by randomly arranged continuous filaments in which there are portions of filaments (or entire filaments) that are made of the second low-melt polyester polymer.

The mesh of glass fibers 13 is then arranged between the first ply 11 and the second ply 12, and the assembly thus obtained is calendered at the softening temperature of the second polyester polymer (which is lower than the softening temperature of the first polyester polymer of which the plies 11 and 12 are predominantly constituted).

Before calendering, the first ply 11, the second ply 12 and the mesh 13 are pre-needled in order to achieve a first consolidation of the assembly that makes it easier to reach the calendering machine.

In practice, the portions of filaments of the second polyester polymer act as a binding agent between the first ply 11 and the second ply 12.

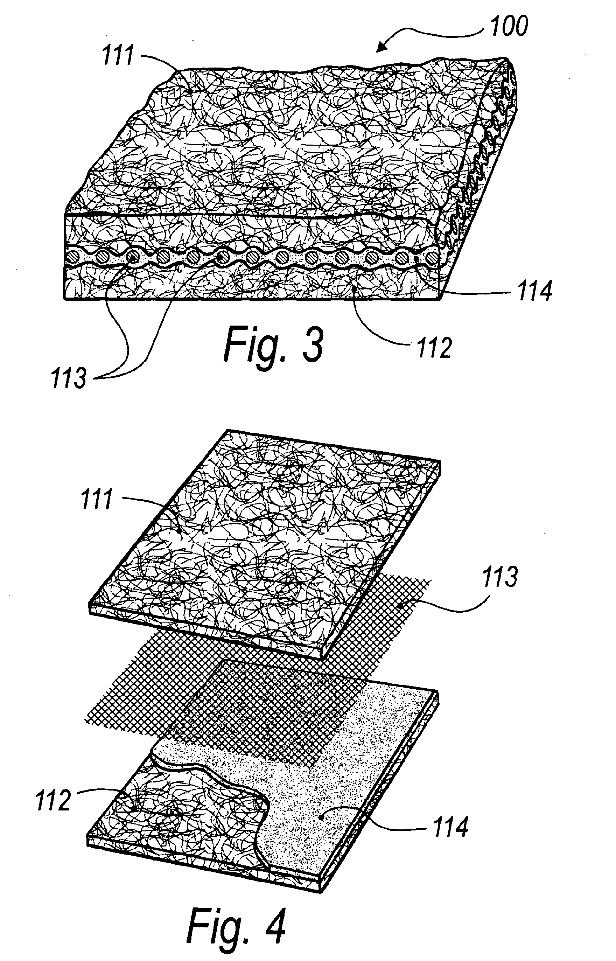

The resulting intermediate component is treated with resin, that is impregnated in the product as shown in the figures (see Figures 1 and 3), dried in an oven and then rolled up in rolls.

The resin mass used constitutes, by weight, approximately 10% of the total weight of the product.

It is evident that coextrusion of the first polyester polymer with the second polyester polymer can be performed, as an alternative, in order to provide only one of the two plies 11 or 12.

With reference to Figures 3 and 4, a second embodiment of a reinforced stratiform product based on non-woven fabric is generally designated by the reference numeral 100.

The stratiform product 100 comprises at least one first ply of non-woven fabric made of randomly arranged continuous polyester filaments, designated by the reference numeral 111.

Preference is given to a ply that has a count comprised between 2.5 and 4.4 dtex, a weight of approximately 40 g/m², and a melting temperature of approximately 255 °C.

The product again comprises at least one second ply of non-woven fabric made of randomly arranged continuous polyester filaments, designated by the reference numeral 112.

In this case also, preference is given to a ply that has a count comprised between 2.5 and 4.4 dtex, a weight of approximately 40 g/m², and a melting temperature of approximately 255 °C.

At least one mesh of glass fibers 113 is arranged between the first ply 111 and the second ply 112.

By way of example, the mesh 113 has a weight of approximately 8 g/m² and can have various counts and constructive methods; for example, the mesh 113 has a warp of 340 dtex and 1.6 filaments per cm and a weft of 340 dtex and 0.4 filaments per cm, the entire assembly being bonded by means of polyvinyl alcohol.

A layer of thermoadhesive material 114, which melts at a lower temperature than the filaments of the first ply 111 and of the second ply 112, is arranged on one of the plies 111 and 112, for example the first ply 111.

The layer of thermoadhesive material is of the low-melt type and is based on at least one among polyester, polyurethane, acrylates and the like.

The layer of thermoadhesive material 114 allows thermal bonding of the first ply 111 and of the second ply 112, as specified more clearly in the method for producing the reinforced stratiform product based on non-woven fabric 100 described hereinafter.

Said method for producing said second embodiment of the reinforced stratiform product based on non-woven fabric 100 consists in extruding the first ply of non-woven fabric 111 and extruding the second ply of non-woven fabric 112.

Then, as in the first embodiment, the layer of thermoadhesive material 114 is deposited onto one of said first and second plies 111 and 112.

The mesh of glass fibers 113 is then arranged between the first ply 111 and the second ply 112, and the resulting assembly is calendered at the softening temperature of the layer of thermoadhesive material 114.

Before calendering, pre-needling is performed on the first ply 111, the second ply 112 and the mesh 113, in order to achieve a first consolidation of the assembly that facilitates reaching the calendering machine.

The resulting intermediate component is treated with resin, dried in an oven, and then rolled up in rolls.

The resin used constitutes, by weight, approximately 10% of the total weight of the product.

For both of the described embodiments it can be said that the resin treatment is designed to minimize shrinkage both during bituminization and during laying.

The presence of the glass fiber mesh improves shrinkage stability in all directions and leads to a reduced resin requirement with respect to known types (10% of total weight with respect to 20%).

Consolidation with thermal calendering provides advantages in terms of productivity per hour, since it allows to avoid needling operations (which are time-consuming).

In practice it has been found that the present invention has achieved the intended aim and objects.

All the technical details may be replaced with other technically equivalent elements.

The materials, so long as they are compatible with the contingent use, as well as the dimensions, may be any according to requirements.

The disclosures in Italian Patent Application No. PD2004A000084 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A reinforced stratiform product based on non-woven fabric, **characterized in that** it comprises:
-- at least one first ply (11, 111) of non-woven fabric formed by randomly arranged continuous filaments made of at least one first polyester polymer,
-- at least one second ply (12, 112) of non-woven fabric formed by randomly arranged continuous filaments made of said at least one first polyester polymer,
-- at least one glass fiber mesh (13, 113), arranged between two of said at least one first and said at least one second plies (11, 111; 12, 112),
the filaments of said at least one first ply (11, 111) and said at least one second ply (12, 112) being thermally bonded by way of the presence, on at least one of said at least one first and said at least one second plies (11, 111; 12, 112), selectively, of
-- at least portions of filaments made of a second polyester polymer that melts at a lower temperature than said first polyester polymer, or
-- a layer of thermoadhesive material (114), which melts at a lower temperature than the filaments of said at least one first ply (111) and said at least one second ply (112),
the entire assembly being consolidated by means of resin.

2. The reinforced stratiform product based on non-woven fabric according to claim 1, **characterized in that** said mesh of glass fibers (13, 113) has a weight of approximately 8 g/m².

3. The reinforced stratiform product based on non-woven fabric according to claim 2, **characterized in that** said mesh (13, 113) has a warp of 340 dtex and 1.6 filaments per cm, a weft of 340 dtex and 0.4 filaments per cm, and the entire assembly is bonded by means of polyvinyl alcohol.

4. The reinforced stratiform product based on non-woven fabric according to one or more of the preceding claims, **characterized in that** said resin is present in an amount of approximately 10% by weight on the total.

5. The reinforced stratiform product based on non-woven fabric according to one or more of the preceding claims, **characterized in that** the filaments made of said first polyester polymer have a count comprised between 2.5 and 4.4 dtex, a weight of approximately 40 g/m², and a melting temperature of approximately 255 °C.

6. The reinforced stratiform product based on non-woven fabric according to one or more of the preceding claims, **characterized in that** said second polyester polymer is present at least in portions of said continuous filaments of said at least one first ply (11) and said at least one second ply (12).

7. The reinforced stratiform product based on non-woven fabric according to claim 6, **characterized in that** said second polyester polymer is provided on said first ply (11) and said at least one second ply (12) in continuous filaments.

8. The reinforced stratiform product based on non-woven fabric according to claim 6 or 7, **characterized in that** the portions of filaments made of said second polyester polymer and any continuous filaments made of said second polyester polymer have a count comprised between 2.5 and 4.4 dtex, a weight comprised between 5 and 8 g/m², and a melting temperature of approximately 234 °C.

9. The reinforced stratiform product based on non-woven fabric according to claims 1 to 5, **characterized in that** said layer of thermoadhesive material (114) is based on at least one among polyester, polyurethane, acrylates and the like.

10. The method for producing a reinforced stratiform product based on non-woven fabric according to one or more of claims 1 to 8, consisting in:
-- forming said at least one first ply (11) of non-woven fabric by coextruding said first polyester polymer and said second polyester polymer so as to provide randomly arranged continuous filaments,
-- forming said at least one second ply (12) of non-woven fabric by extruding at least said first polyester polymer so as to provide randomly arranged continuous filaments,
-- arranging said at least one mesh of glass fibers (13) between said at least one first ply (11) and said at least one second ply (12),
-- calendering the assembly formed by said at least one first ply (11) and said at least one second ply (12) and said mesh of glass fibers (13) at the temperature at which said second polymer softens,
-- resin-treating and drying said assembly.

11. A method for producing a reinforced stratiform product based on non-woven fabric according to claim 10, **characterized in that** said at least one second ply (12) of non-woven fabric is formed by coextruding said first polyester polymer and said second polyester polymer so as to provide randomly arranged continuous filaments.

12. The method for producing a reinforced stratiform product based on non-woven fabric according to claim 10 or 11, **characterized in that** before the calendering step said first ply (11), said second ply (12) and said mesh (13) are pre-needled in order to achieve a first consolidation of the assembly that facilitates reaching the calendering machine.

13. The method for producing a reinforced stratiform product based on non-woven fabric according to one or more of claims 1 to 5 and 9, consisting in:
-- extruding at least one first ply (111) of non-woven fabric made of randomly arranged continuous polyester filaments,
-- extruding at least one second ply (112) of non-woven fabric made of randomly arranged continuous polyester filaments,
-- depositing onto at least one of said at least one first ply (111) and at least one second ply (112) a layer of thermoadhesive material (114) that melts at a lower temperature than the filaments of said at least one first ply (111) and said at least one second ply (112),
-- arranging at least one mesh of glass fibers (113) between said at least one first ply (111) and said at least one second ply (112),
-- calendering the assembly formed by said at least one first ply (111) and said at least one second ply (112) and said mesh of glass fibers (113) at the softening temperature of said thermoadhesive material (114),
-- resin-treating and drying said assembly.

14. A method for producing a reinforced stratiform product based on non-woven fabric according to claim 13, **characterized in that** before the calendering step said first ply (111), said second ply (112) and said mesh (113) are pre-needled in order to achieve a first consolidation of the assembly so as to facilitate reaching the calendering machine.
